# EUROPEAN PATENT APPLICATION

(11) **EP 4 813 586 A1**
(43) Date of publication of application: **30.09.2026**
(21) Application number: 24903718.5
(22) Date of filing: 11.12.2024
(51) Int. Cl.: B25J 13/08, G06N 3/008

(54) **CONTROL SYSTEM FOR ROBOT AND CONTROL PROGRAM FOR ROBOT**

(30) Priority: 12.12.2023 JP 2023209614
(71) Applicant: SoftBank Group Corp., Tokyo 105-7537 (JP)
(72) Inventor: SON, Masayoshi, Tokyo 105-7537 (JP)
(74) Representative: DREISS Patentanwälte PartG mbB
(86) International application number: PCT/JP2024/043820
(87) International publication number: WO 2025/127064

(57) **Abstract**

In a hand tool 50, a sensor group having different information acquisition functions is attached to each of finger portions 22A, 22B, 22C, 22D, and 22E. In other words, the sensor group for acquiring various types of information necessary for controlling a robot in a multimodal manner is attached. A visual sensor 51A that detects visual information is attached to the thumb, an auditory sensor 51B that detects auditory information is attached to the index finger, an olfactory sensor 51C is attached to the middle finger, a tactile sensor 51D that detects tactile information is attached to the ring finger, and a taste sensor 51E that detects taste information is attached to the little finger.

## Description

### Technical Field

The present invention relates to a robot control system and a robot control program.

### Background Art

It has been proposed to move a robot in a multimodal manner by using generative AI (see Patent Literature 1 and Patent Literature 2).

The term "multimodal" indicates that not only single piece of information such as only image recognition or only language processing but also a plurality of pieces of information are used.

In particular, regarding the steps of execution, feedback, and adaptation of a robot, a plurality of sensor groups for acquiring a wide variety of information is essential.

### Citation List

### Patent Literature

Patent Literature 1: Japanese Patent Application Laid-Open (JP-A) No. 2022-081591
Patent Literature 2: JP-A No. 2022-6610

### SUMMARY OF INVENTION

### Technical Problem

However, a configuration in which each sensor module of a sensor group is installed at an appropriate position, information is acquired in an appropriate state and at an appropriate time, and information required to be acquired is acquired, and a specification for acquiring necessary information have not been achieved.

In consideration of the above fact, an object of the present disclosure is to provide a robot control system and a robot control program capable of installing, at an appropriate position, each sensor module of a sensor group for acquiring various types of information necessary for controlling a robot in a multimodal manner and acquiring information from each sensor module in an appropriate state and at an appropriate time.

### Solution to Problem

A robot control system according to the disclosure is a control system for a robot including a work actuator attached to the robot and enabling the robot to execute work, and sensor units that acquire a plurality of types of information necessary for execution of the work by the work actuator, the robot control system including an action information creation unit that creates action control information necessary for action control and feedback control of the robot by collating the plurality of types of information from the respective sensor units with attribute information corresponding to the work, and a control unit that controls the work of the robot on the basis of the action control information.

In the disclosure, the robot control system further includes a camera that captures an image of a target object of the work and identifies a type of the target object; and a motion processing unit that specifies a position of the target object.

The camera identifies the imaged target object (hereinafter, also referred to as a load) on the basis of the captured image information. That is, the camera has a function of acquiring information for specifying the type (a shape, a size, a hardness, and the like) of the target object.

The motion processing unit (MoPU) outputs vector information of motion along a predetermined coordinate axis of a point indicating the presence position of the target object together with the motion information as position information. That is, the motion information output from the MoPU includes only information indicating the motion (a movement direction and a movement speed) on the coordinate axis (x-axis, y-axis, and z-axis) of a center point (or a centroid point) of the target object. That is, it is possible to accurately guide the trajectory in a case in which the grip portion approaches the target object.

In the disclosure, acquired information that is acquired by the sensor units is information regarding visual sense, auditory sense, olfactory sense, tactile sense, and taste, and the action control information is obtained by combining a plurality of pieces of acquired information.

The robot control system according to the disclosure causes a computer to operate as the action information creation unit and the control unit of the robot control system.

The above summary of the disclosure does not enumerate all of the necessary features of the disclosure. A subcombination of these feature groups can also be included in the disclosure.

### Advantageous Effects of Invention

As described above, according to the disclosure, it is possible to achieve an effect in which each sensor module of a sensor group for acquiring various types of information necessary for controlling a robot in a multimodal manner can be installed at an appropriate position, and information can be acquired from each sensor module in an appropriate state and at an appropriate time.

### BRIEF DESCRIPTION OF DRAWINGS

Fig. 1 is a front view of a humanoid robot according to the present embodiment.
Fig. 2 is a front view of a palm side of a grip portion according to the present embodiment.
Fig. 3 is a diagram schematically illustrating an example of a functional configuration of the humanoid robot of the present embodiment.
Fig. 4 is a front view of the grip portion according to the present embodiment.
Fig. 5 is an information acquisition control function block diagram in an information processing device for executing the work according to the embodiment.
Fig. 6 is a control flowchart illustrating a processing procedure of information acquisition work according to the present embodiment.
Fig. 7 is a diagram schematically illustrating an example of computer hardware functioning as an information processing device.

### DESCRIPTION OF EMBODIMENTS

Hereinafter, the disclosure will be described through embodiments of the disclosure, but the following embodiments do not limit the disclosure according to the claims. Not all combinations of features described in the embodiments are essential to the solution of the disclosure.

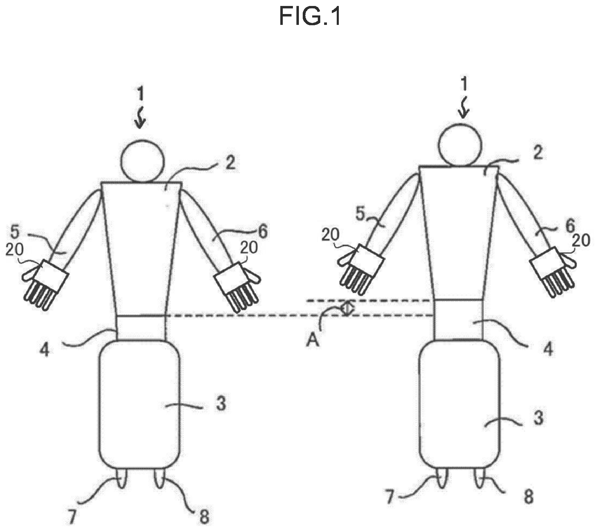

Fig. 1 is a front view of a humanoid robot 1 of the present embodiment. As illustrated in Fig. 1, the humanoid robot 1 of the present embodiment includes an upper body portion 2, a leg portion 3, and a coupling portion 4 that turnably couples the upper body portion 2 to the leg portion 3.

The upper body portion 2 has two arm portions 5 and 6. The arm portions 5 and 6 are turnably attached to the left and right of the upper body portion 2. Grip portions 20 (that will be described in detail later) for gripping a load 100 are attached to the tips of the arm portions 5 and 6. The number of arm portions is not limited to two, and may be one or three or more.

The leg portion 3 has two wheels 7, 8 attached to a lower part of the leg portion 3, and enables the humanoid robot 1 to be movable on a floor on which the humanoid robot 1 is disposed.

The coupling portion 4 couples the upper body portion 2 and the leg portion 3 to be turnable. Therefore, the upper body portion 2 can be tilted forward and backward with respect to the leg portion 3. The leg portion 3 has a balance function for preventing the humanoid robot 1 from falling down in a case in which the upper body portion 2 tilts forward or backward with respect to the leg portion 3 or the humanoid robot 1 moves.

As illustrated in Fig. 1, the coupling portion 4 has a function of changing a distance between the upper body portion 2 and the leg portion 3. Therefore, the position of the upper body portion 2 in the up-down direction with respect to the leg portion 3 can be adjusted as indicated by an arrow A to match a height of a workbench in a production line.

The driving of the humanoid robot 1 of the present embodiment is controlled by a control system 10 mounted in the humanoid robot 1.

### (Structure of Grip Portion 20)

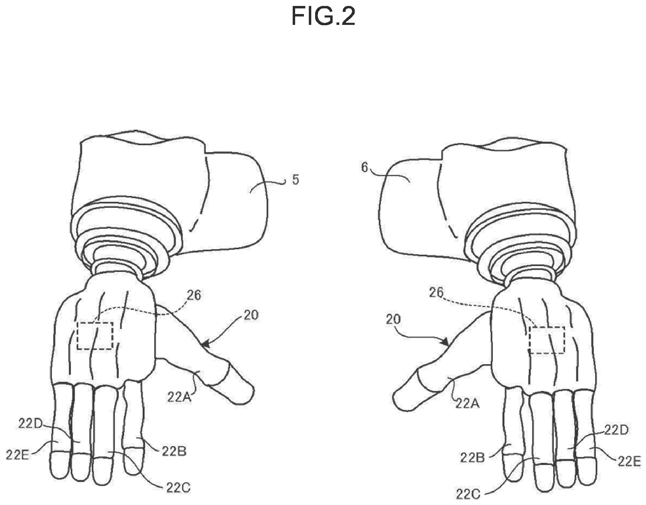

As illustrated in Fig. 2, the grip portion 20 attached to the distal ends of the arm portions 5 and 6 has a hand structure similar to that of a human (Intelligent Hand System).

As illustrated in Fig. 2, the grip portion 20 according to the present embodiment includes a palm portion as a base corresponding to a so-called human palm, and five finger portions 22A, 22B, 22C, 22D, and 22E each including a plurality of joints are attached to the palm portion. In the present embodiment, the number of fingers of the grip portion 20L is five, but finger structures having different numbers of fingers such as three fingers may be used.

A palm sensor 26 is attached to the palm portion. A high-resolution camera configuring the palm sensor 26 according to the present embodiment identifies the type of the imaged load 100 on the basis of captured image information.

In other words, the high-resolution camera has a function of acquiring information for specifying the type of the load 100 (a shape, a size, a hardness, and the like).

On the other hand, a motion processing unit (MoPU) configuring the palm sensor 26 of the present embodiment together with the high-resolution camera outputs, for example, at a frame rate of 1000 frames/second or more, motion information indicating a captured motion (in this case, the motion is a relative motion between the load 100 and the arm portions 5 and 6) of the load 100 from images of the load 100 captured at a frame rate of 1000 frames/second or more. The frame rate may be increased in a case in which the moving load 100 is detected, and the frame rate may be decreased in a case in which a fixed object (the non-moving load 100) is detected.

The MoPU outputs, as motion information, vector information of a motion of a point indicating a presence position of the load 100 along a predetermined coordinate axis. That is, the motion information output from the MoPU does not include information necessary for identifying the type of the imaged load 100 (the above care product and food product), and includes only information indicating the motion (a movement direction and a movement speed) on the coordinate axis (x-axis, y-axis, and z-axis) of a center point (or a centroid point) of the load 100.

That is, it is possible to accurately guide the trajectory in a case in which the grip portion 20 approaches the load 100.

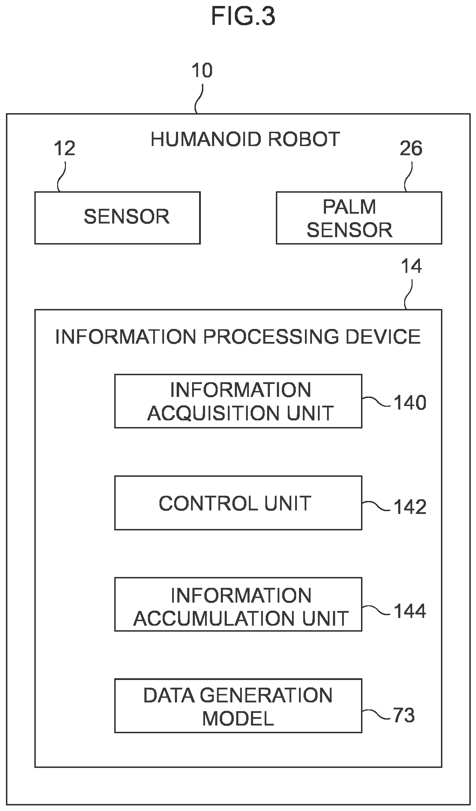

Information output from the palm sensor 26 including the high-resolution camera and the MoPU is output to an information processing device 14 (see Fig. 3).

The information processing device 14 can specify a position of the load 100 with high accuracy on the basis of the information from the palm sensor 26 including the high-resolution camera and the MoPU, calculate the degree of spread of the finger portions 22A, 22B, and 22C at the time of gripping, the strength at the time of gripping, the suction force by a suction pad 24, and the like, accurately control minute movements of the arm portions 5 and 6 and the grip portion 20, and can cope with picking work of the various loads 100.

Fig. 3 is a schematic diagram illustrating an example of the control system of the humanoid robot of the present embodiment. The control system 10 includes a sensor 12 mounted on the humanoid robot, the palm sensor 26 including the high-resolution camera and the MoPU, and the information processing device 14.

The sensor 12 sequentially acquires information indicating at least a distance and an angle between the load 100 that is located around the humanoid robot 1 and is a work target of the humanoid robot 1 and the arm portions 5 and 6. As the sensor 12, a highest-performance camera, a solid-state light detection and ranging (LiDAR), a multi-color laser coaxial displacement meter, or any of various other sensor groups may be used. Examples of the sensor 12 include a vibratory meter, a thermo camera, a hardness meter, a radar, a LiDAR, a high-pixel/telephoto/ultra-wide angle/360 degrees/high-performance camera, a vision recognition sensor, a microsound sensor, an ultrasonic sensor, a vibration sensor, an infrared sensor, an ultraviolet sensor, an electromagnetic wave sensor, a temperature sensor, a humidity sensor, a spot AI weather forecast sensor, a high-precision multi-channel GPS sensor, a low-altitude satellite information sensor, and a sensor using long tail incident AI data.

In addition to the above information, the sensor 12 detects an image, a distance, vibration, heat, odor, a color, sound, an ultrasonic wave, an ultraviolet ray, an infrared ray, or the like. Examples of the information detected by sensor 12 include movement of the center of gravity of the humanoid robot 1, a material of the floor on which the humanoid robot 1 is installed, the outside air temperature, the outside air humidity, vertical and lateral oblique inclination angles of the floor, and a moisture content.

The sensor 12 performs such detection, for example, every nanosecond.

The palm sensor 26 (the high-resolution camera and the MoPU) is a sensor provided in the grip portion 20 of the arm portions 5 and 6, and has a camera function of imaging the load 100 and a position specifying function of specifying a position of the load 100 separately from the sensor 12.

In a case in which one MoPU 12 is used, it is possible to acquire vector information of a motion of a point indicating the presence position of the load 100 along each of the two coordinate axes (the x-axis and the y-axis) in the three-dimensional orthogonal coordinate system. According to the principle of stereo cameras, two MoPUs 12 may be used to output vector information of the motion of the point indicating the presence position of the load 100 along each of three coordinate axes (the x-axis, the y-axis, and the z-axis) in the three-dimensional orthogonal coordinate system. The z-axis is an axis along a depth method (traveling of a vehicle).

The information processing device 14 includes an information acquisition unit 140, a control unit 142, and an information accumulation unit 144.

The information acquisition unit 140 acquires information of the load 100 detected by the sensor 12 and the palm sensor 26 (the high-resolution camera and the MoPU).

The control unit 142 uses the information acquired by the information acquisition unit 140 from the sensor 12 and artificial intelligence (AI) to control a turning action of the coupling unit 4, a movement operation in the up-down direction, operations of the arm portions 5 and 6, and the like.

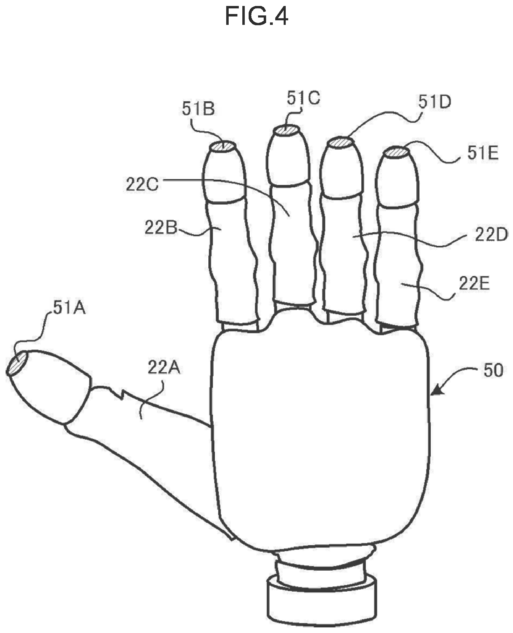

As illustrated in Fig. 4, in a hand tool 50 according to the present embodiment, a sensor group having different information acquisition functions is attached to each of the finger portions 22A, 22B, 22C, 22D, and 22E. In other words, the sensor group for acquiring various types of information necessary for controlling the robot in a multimodal manner is attached.

In the present embodiment, the following sensors are attached to the respective finger portions 21A to 21E.

A visual sensor 51A that detects visual information as attribute information is attached to the finger portion 21A (thumb).

An auditory sensor 51B that detects auditory information as attribute information is attached to the finger portion 21B (index finger).

An olfactory sensor 51C that detects olfactory information as attribute information is attached to the finger portion 21C (middle finger).

A tactile sensor 51D that detects tactile information as attribute information is attached to the finger portion 21D (ring finger).

A taste sensor 51E that detects taste information as attribute information is attached to the finger portion 21E (little finger).

Examples of the visual sensor 51A include a camera and an infrared camera.

Examples of the auditory sensor 51B include a microphone.

The olfactory sensor 51C is a sensor that responds to smell, and an output thereof may be any of a current, a voltage, a light amount, or the like.

Examples of the tactile sensor 51D include a pressure sensor and an optical sensor. A mechanical switch may be used. Examples of the tactile sensor include a temperature sensor and a humidity sensor that detects a phenomenon felt by the skin.

Examples of the taste sensor 51E include a bitter taste sensor, a sour taste sensor, an umami taste sensor, a salty taste sensor, and an astringency sensor.

Each of the sensor units (51A to 51E) is not limited to the above, and a detection mode is also not particularly limited to contact, non-contact, or the like. Detection sensors having the same type of attributes may be attached as necessary.

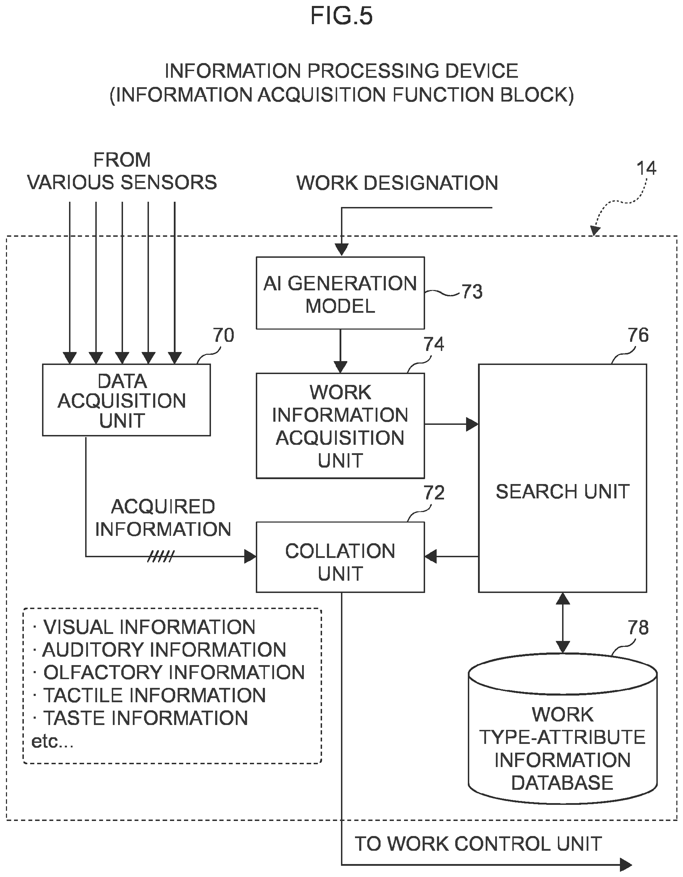

Fig. 5 is a functional block diagram related to each step (command interpretation → instruction translation → robot execution → feedback and adaptation) in the case of controlling the robot in a multimodal manner, executed in the information processing device 14 (see Fig. 3). The blocks illustrated in Fig. 5 are classified according to functions, and some or all of the information acquisition control functions may be operated by a software program by using a microcomputer (including an ASIC or the like).

Here, the term "multimodal" indicates that not only single information such as only image recognition or only language processing but also a plurality of pieces of information are used.

More specifically, the multimodal deep learning problem setting may be classified into five categories of representation, translation, alignment, fusion, and co-learning.

Representation is a task of solving how to express and summarize multimodal data, and examples thereof include whether text information and audio signal data can be handled in the same space.

Translation is a task of translating data of a certain modality into data of another modality, and examples thereof include generating an explanatory sentence from an image.

Alignment is a task of clarifying a direct relationship between a plurality of modalities, and examples thereof include associating recipe information (text) with information in an image in order to accurately rearrange each scene of a moving image of cooking.

Fusion is a task of using information of a plurality of modalities to make a certain prediction, and examples thereof include using speech vocal sound and a motion (moving image) of a speaker's mouth to accurately predict speech content.

Co-learning is a task of transferring an inference model, a vector representation, or the like created in a certain modality to another modality, and examples thereof include Zero-shot learning.

Controlling the robot by using the generative AI, in particular, a natural language processing model, includes the following steps.

(Command Interpretation) The AI interprets a command given in human natural language and translates the command into an instruction that can be understood by the robot.

(Instruction Translation) The interpreted command is translated into an appropriate format (for example, a specific code or signal) according to the control system for the robot.

(Robot Execution) The robot operates according to the instructions after being translated. This may include physical actions, collecting data, or performing a specific task.

(Feedback and Adaptation) The AI receives feedback (for example, an execution status and a problem) from the robot, interprets the feedback, and adjusts an action as necessary.

In the present embodiment, the humanoid robot 1 is controlled by not only performing the language processing on the command given in the natural language of the human, but also utilizing the information obtained from each of the sensor units (51A to 51E), that is, the information regarding the visual sense, the auditory sense, the olfactory sense, the tactile sense, and the taste sense.

First, a target object attribute determination control function of the information processing device 14 includes a data acquisition unit 70. The data acquisition unit 70 acquires detection data of each sensor unit (51A to 51E) attached to the fingertip of the hand tool 50. The target object attribute determination control function of the information processing device 14 includes the data acquisition unit 70. The data acquisition unit 70 acquires detection data of each of the sensor unit (51A to 51E) attached to the fingertips of the hand tool 50.

The data acquisition unit 70 is connected to a collation unit 72. The data acquisition unit 70 sends the acquired detection data from each of the sensor units (51A to 51E) to the collation unit 72.

The information processing device 14 includes a data generation model 73. The data generation model 73 is so-called generative artificial intelligence (AI). Examples of the data generation model 73 include generative AI such as ChatGPT (Internet search <URL: https://openai.com/blog/chatgpt>) and geminni (Internet search <URL: https://japan.googleblog.com/2023/12/gemini.html>). The data generation model 73 is obtained by causing a neural network to perform deep learning. To the data generation model 73, a prompt including an instruction is input, and inference data such as vocal sound data indicating vocal sound, text data indicating text, and image data indicating an image is input. The data generation model 73 infers the input inference data according to the instruction indicated by the prompt, and outputs an inference result in data formats such as vocal sound data and text data. Here, the inference indicates, for example, analysis, classification, prediction, and/or summary.

Here, the information processing device 14 receives a command given in human natural language as work designation from the outside of the device. The data generation model 73 interprets the command and translates the command into an instruction sentence for controlling the humanoid robot 1. The data generation model 73 may be provided in a server outside the control system 10, and a command may be translated into an instruction in the server, and the instruction may be transmitted to the information processing device 14.

The information acquisition control function of the information processing device 14 includes a work information acquisition unit 74. The work information acquisition unit 74 acquires the instruction sentence for controlling the humanoid robot 1 from the data generation model 73. The work information acquisition unit 74 is connected to a search unit 76 and transmits work information.

The search unit 76 accesses a work type-attribute information database 78 and reads attribute information corresponding to a designated work type. The attribute information includes selection of various sensors, importance, and the like, and the priority and the like of the acquired information can be determined by using the attribute information. The attribute information read by the search unit 76 is sent to the collation unit 72.

Here, the collation unit 72 collates the acquired information received from the search unit 76 with the attribute information received from the data acquisition unit 70, and sends the collation result to a work control unit (not illustrated) which is another function of the information processing device 14. That is, in the collation unit 72, the instruction sentence for controlling the humanoid robot 1 is translated into an appropriate format (for example, a specific code or signal) in the work control unit (not illustrated). The collation unit 72 is an example of a translation unit.

In the operation of the humanoid robot 1, as the process of the feedback and the adaptation, the work information acquisition unit 74 receives the feedback (for example, an execution status and a problem) from the work control unit (not illustrated), and the data generation model 73 analyzes the content of the feedback. An operation of the work control unit (not illustrated) is adjusted.

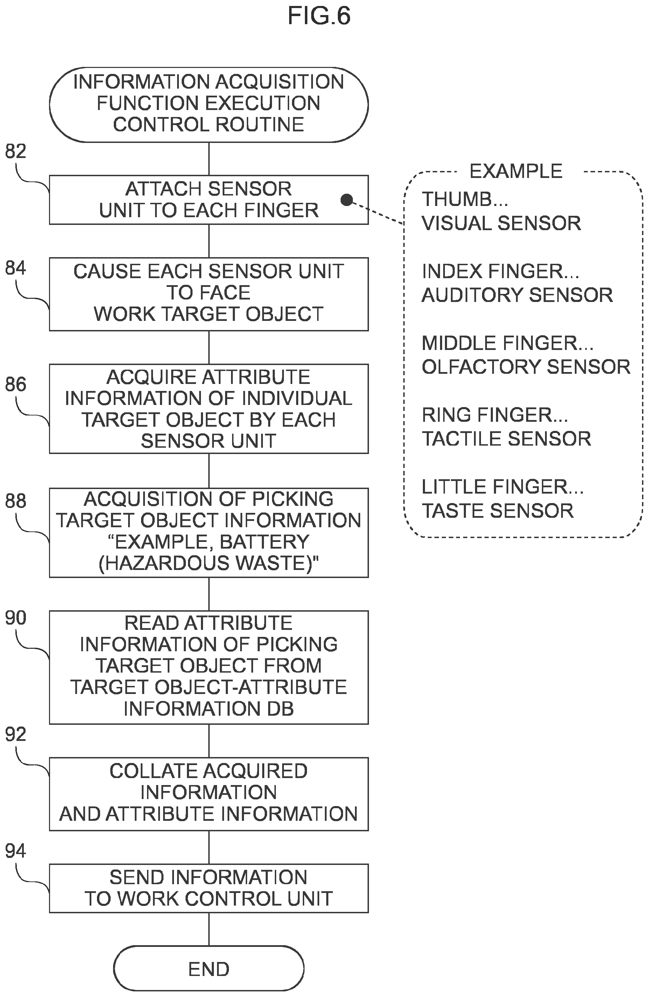

The operation of the humanoid robot 1 of the present embodiment will be described below with reference to the flowchart of Fig. 6.

Hereinafter, the operation of the present embodiment will be described with reference to the flowchart of Fig. 6. In step 82, the sensor function is attached to each fingertip of the hand tool 50. As an example, the visual sensor 51A is attached to the thumb, the auditory sensor 51B is attached to the index finger, the olfactory sensor 51C is attached to the middle finger, the tactile sensor 51D is attached to the ring finger, and the taste sensor 51E is attached to the little finger.

The relationship between the finger type and the sensor type may be changed as necessary, or as many sensors as necessary and sufficient may be attached.

In the next step 84, each of the sensor units (51A to 51E) faces a work target object, and the process proceeds to step 86.

In step 86, each of the sensor units (51A to 51E) acquires information regarding an individual target object (acquired information).

In the next step 88, the work information is acquired, and then in step 90, the attribute information corresponding to the work type is read from the work type-attribute information database (DB), and the process proceeds to step 92 to execute collation between the acquired information and the attribute information. That is, collation between the read attribute information and the detected attribute information is executed.

In step 94, the collation result (motion control information obtained from the plurality of pieces of acquired information) is sent to the work control unit which is another function of the information processing device 14, and this routine ends.

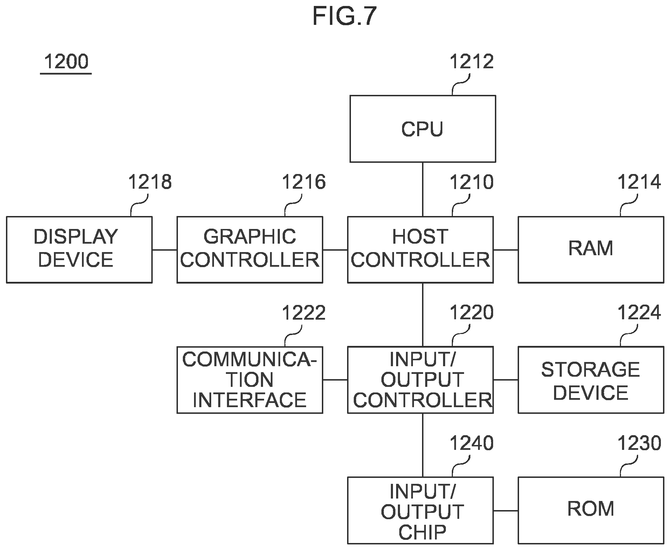

Fig. 7 schematically illustrates an example of a hardware configuration of a computer 1200 that functions as the information processing device 14. A program installed in the computer 1200 can cause the computer 1200 to function as one or more "units" of the device according to the present embodiment, or cause the computer 1200 to execute an operation associated with the device according to the present embodiment or one or more "units" thereof, and/or cause the computer 1200 to execute a process according to the present embodiment or a stage of the process. Such programs may be executed by a CPU 1212 to cause the computer 1200 to execute certain operations associated with some or all of the blocks in the flowcharts and block diagrams described herein.

The computer 1200 according to the present embodiment includes a CPU 1212, a RAM 1214, and a graphic controller 1216, which are connected to each other via a host controller 1210. The computer 1200 also includes input/output units such as a communication interface 1222, a storage device 1224, a DVD drive, and an IC card drive, which are connected to the host controller 1210 via an input/output controller 1220. The DVD drive may be a DVD-ROM drive, a DVD-RAM drive, or the like. The storage device 1224 may be a hard disk drive, a solid state drive, or the like. The computer 1200 also includes a ROM 1230 and an input/output unit such as a keyboard, which are connected to the input/output controller 1220 via an input/output chip 1240.

The CPU 1212 operates according to programs stored in the ROM 1230 and the RAM 1214, thereby controlling each unit. The graphic controller 1216 acquires image data generated by the CPU 1212 in a frame buffer or the like provided in the RAM 1214 or itself, and causes the image data to be displayed on a display device 1218.

The communication interface 1222 communicates with other electronic devices via a network. The storage device 1224 stores programs and data used by the CPU 1212 in the computer 1200. The DVD drive reads a program or data from a DVD-ROM or the like and provides the program or data to the storage device 1224. The IC card drive reads a program and data from the IC card and/or writes the program and data to the IC card.

The ROM 1230 stores therein a boot program or the like executed by the computer 1200 at the time of activation and/or a program depending on hardware of the computer 1200. The input/output chip 1240 may also connect various input/output units to the input/output controller 1220 via a USB port, a parallel port, a serial port, a keyboard port, a mouse port, or the like.

The program is provided by a computer-readable storage medium such as a DVD-ROM or an IC card. The program is read from a computer-readable storage medium, installed in the storage device 1224, the RAM 1214, or the ROM 1230, which is also an example of a computer-readable storage medium, and executed by the CPU 1212. The information processing described in such a program provides cooperation between the program read by the computer 1200 and the various types of hardware resources. A device or a method may be configured by implementing an operation or processing of information according to use of the computer 1200.

For example, in a case in which communication is executed between the computer 1200 and an external device, the CPU 1212 may execute a communication program loaded in the RAM 1214 and instruct the communication interface 1222 to perform communication processing on the basis of processing described in the communication program. Under the control of the CPU 1212, the communication interface 1222 reads transmission data stored in a transmission buffer area provided in a recording medium such as the RAM 1214, the storage device 1224, the DVD-ROM, or the IC card, transmits the read transmission data to the network, or writes reception data received from the network to a reception buffer area or the like provided on the recording medium.

The CPU 1212 may cause the RAM 1214 to read all or a necessary portion of a file or database stored in an external recording medium such as the storage device 1224, the DVD drive (DVD-ROM), or the IC card, and may execute various types of processing on data in the RAM 1214. Next, the CPU 1212 may write back the processed data to the external recording medium.

Various types of information such as various types of programs, data, tables, and databases may be stored in a recording medium and subjected to information processing. The CPU 1212 may execute various types of processing on the data read from the RAM 1214, including various types of operations, information processing, condition determination, conditional branching, unconditional branching, information retrieval/replacement, and the like, which are described throughout the disclosure and specified by a command sequence of a program, and writes back the results to the RAM 1214. The CPU 1212 may search for information in a file, a database, or the like in the recording medium. For example, in a case in which a plurality of entries each having an attribute value of a first attribute associated with an attribute value of a second attribute are stored in the recording medium, the CPU 1212 may search for an entry in which the attribute value of the first attribute matches a specified condition from the plurality of entries, read the attribute value of the second attribute stored in the entry, and thus acquire the attribute value of the second attribute associated with the first attribute satisfying a predetermined condition.

The programs or software modules described above may be stored in the computer 1200 or a computer-readable storage medium near the computer 1200. A recording medium such as a hard disk or a RAM provided in a server system connected to a dedicated communication network or the Internet may be used as a computer-readable storage medium, and provides a program to the computer 1200 via the network.

Blocks in the flowcharts and the block diagrams in the present embodiment may represent stages of a process in which an operation is performed or "units" of a device having a role of performing an operation. Specific stages and "units" may be implemented by a dedicated circuit, a programmable circuit supplied along with computer readable instructions stored on a computer readable storage medium, and/or a processor supplied along with computer readable instructions stored on a computer readable storage medium. Dedicated circuits may include digital and/or analog hardware circuits, and may include integrated circuits (ICs) and/or discrete circuits. Programmable circuits may include reconfigurable hardware circuits including, for example, AND, OR, XOR, NAND, NOR, and other logical operations, flip-flops, registers, and memory elements, such as field programmable gate arrays (FPGA) and programmable logic arrays (PLA).

Computer readable storage media may include any tangible device capable of storing instructions executed by a suitable device, and, as a result, a computer readable storage medium having instructions stored thereon has a product including instructions that may be executed to create means for executing operations designated in the flowcharts or block diagrams. Examples of the computer readable storage medium may include an electronic storage medium, a magnetic storage medium, an optical storage medium, an electromagnetic storage medium, and a semiconductor storage medium. More specific examples of the computer readable storage medium may include a Floppy (registered trademark) disk, a diskette, a hard disk, a random access memory (RAM), a read-only memory (ROM), an erasable programmable read-only memory (an EPROM or a flash memory), an electrically erasable programmable read-only memory (EEPROM), a static random access memory (SRAM), a compact disc read-only memory (CD-ROM), a digital versatile disk (DVD), a Blu-Ray (registered trademark) disk, a memory stick, and an integrated circuit card.

The computer readable instructions may include either source codes or object codes written in any combination of one or more programming languages, including assembler instructions, instruction-set-architecture (ISA) instructions, machine instructions, machine-dependent instructions, microcode, firmware instructions, state-setting data, or an object oriented programming language such as Smalltalk (registered trademark), or JAVA (registered trademark), C++, and conventional procedural programming languages such as the "C" programming language or similar programming languages.

The computer readable instructions may be provided to a processor of a general purpose computer, a special purpose computer, or another programmable data processing device, or a programmable circuit locally or via a local area network (LAN) or a wide area network (WAN) such as the Internet, in order to cause the processor of the general purpose computer, the special purpose computer, or another programmable data processing device or the programmable circuit to execute the computer readable instructions to generate means for executing operations designated in the flowcharts or the block diagrams. Examples of the processor include a computer processor, a processing unit, a microprocessor, a digital signal processor, a controller, and a microcontroller.

Although the technology of the disclosure has been described by using each embodiment, the technology of the disclosure is not limited to the scope disclosed in each embodiment. It is apparent to those skilled in the art that various modifications or improvements can be made to the above embodiments. It is apparent from the description of the claims that modes to which such modifications or improvements are added can also be included in the technical scope of the disclosure.

The order of execution of each piece of processing of operations, procedures, steps, stages, and the like in the devices, the systems, the programs, and the methods shown in the claims, the specification, and the drawings can be realized in any order unless "before", "prior to", or the like is explicitly stated, and unless the output of the previous processing is used in the later processing. Even in a case in which the operation flow in the claims, the specification, and the drawings is described by using "first,", "next,", and the like for convenience, this does not mean that it is essential to perform in this order.

Although the technology of the disclosure has been described by using each embodiment, the technology of the disclosure is not limited to the scope disclosed in each embodiment. It is apparent to those skilled in the art that various modifications or improvements can be made to the above embodiments. It is apparent from the description of the claims that modes to which such modifications or improvements are added can also be included in the technical scope of the disclosure.

The order of execution of each piece of processing of operations, procedures, steps, stages, and the like in the devices, the systems, the programs, and the methods shown in the claims, the specification, and the drawings can be realized in any order unless "before", "prior to", or the like is explicitly stated, and unless the output of the previous processing is used in the later processing. Even in a case in which the operation flow in the claims, the specification, and the drawings is described by using "first,", "next,", and the like for convenience, this does not mean that it is essential to perform in this order.

The entire disclosure of Japanese Patent Application No. 2023-209614 filed on December 12, 2023 is incorporated herein by reference.

### REFERENCE SIGNS LIST

- 1: Humanoid robot
- 2: Upper body portion
- 3: Leg portion
- 4: Coupling portion
- 5, 6: Arm portion
- 7, 8: Wheel
- 10: Control system
- 12: Sensor
- 14: Information processing device
- 20: Grip portion
- 22A, 22B, 22C, 22D, 22E: Finger portion
- 26: Palm sensor
- 51A: Visual sensor
- 51B: Auditory sensor
- 51C: Olfactory sensor
- 51D: Tactile sensor
- 51E: Taste sensor
- 1200: Computer
- 1210: Host controller
- 1212: CPU
- 1214: RAM
- 1216: Graphic controller
- 1218: Display device
- 1220: Input/output controller
- 1222: Communication interface
- 1224: Storage device
- 1230: ROM
- 1240: Input/output chip

## Claims

1. A robot control system for a robot including a work actuator attached to the robot and enabling the robot to execute work, and sensor units that acquire a plurality of types of information necessary for execution of the work by the work actuator, the robot control system comprising:
an action information creation unit that creates action control information necessary for action control and feedback control of the robot by collating the plurality of types of information from the respective sensor units with attribute information corresponding to the work; and
a control unit that controls the work of the robot on the basis of the action control information.

2. The robot control system according to claim 1, further comprising: a camera that captures an image of a target object of the work and identifies a type of the target object; and a motion processing unit that specifies a position of the target object.

3. The robot control system according to claim 2, wherein acquired information that is acquired by the sensor units is
information regarding visual sense, auditory sense, olfactory sense, tactile sense, and taste, and the action control information is obtained by combining a plurality of pieces of acquired information.

4. A robot control program causing a computer to operate as the action information creation unit and the control unit according to any one of claims 1 to 3.
